Europäisches Patentamt

(19) European Patent Office

Office européen des brevets

(11) Publication number: **0 066 422**
A2

# (12) EUROPEAN PATENT APPLICATION

(21) Application number: 82302583.8

(22) Date of filing: 20.05.82

(51) Int. Cl.³: **A 47 F 1/035**
**B 65 D 83/06, G 01 F 11/12**

(30) Priority: 20.05.81 GB 8115392

(43) Date of publication of application:
08.12.82 Bulletin 82/49

(84) Designated Contracting States:
AT BE CH DE FR GB IT LI LU NL SE

(71) Applicant: Youngs, Clive Edward
7 Stephens Cottages Clockhouse Lane
North Stifford Grays, Essex(GB)

(72) Inventor: Youngs, Clive Edward
7 Stephens Cottages Clockhouse Lane
North Stifford Grays, Essex(GB)

(74) Representative: Brown, David Alan et al,
MATHYS & SQUIRE 10 Fleet Street
London EC4Y 1AY(GB)

(54) Dispenser for particulate material.

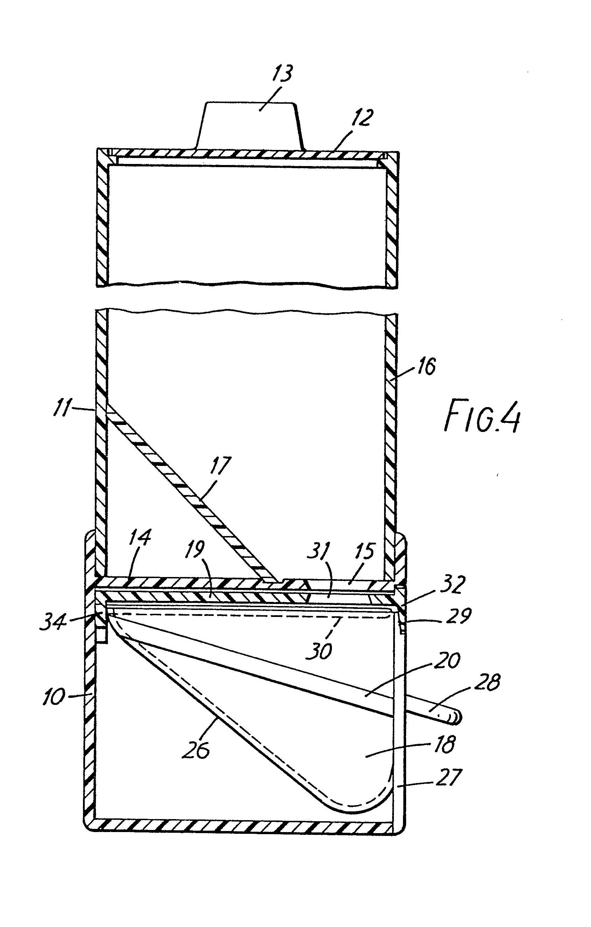

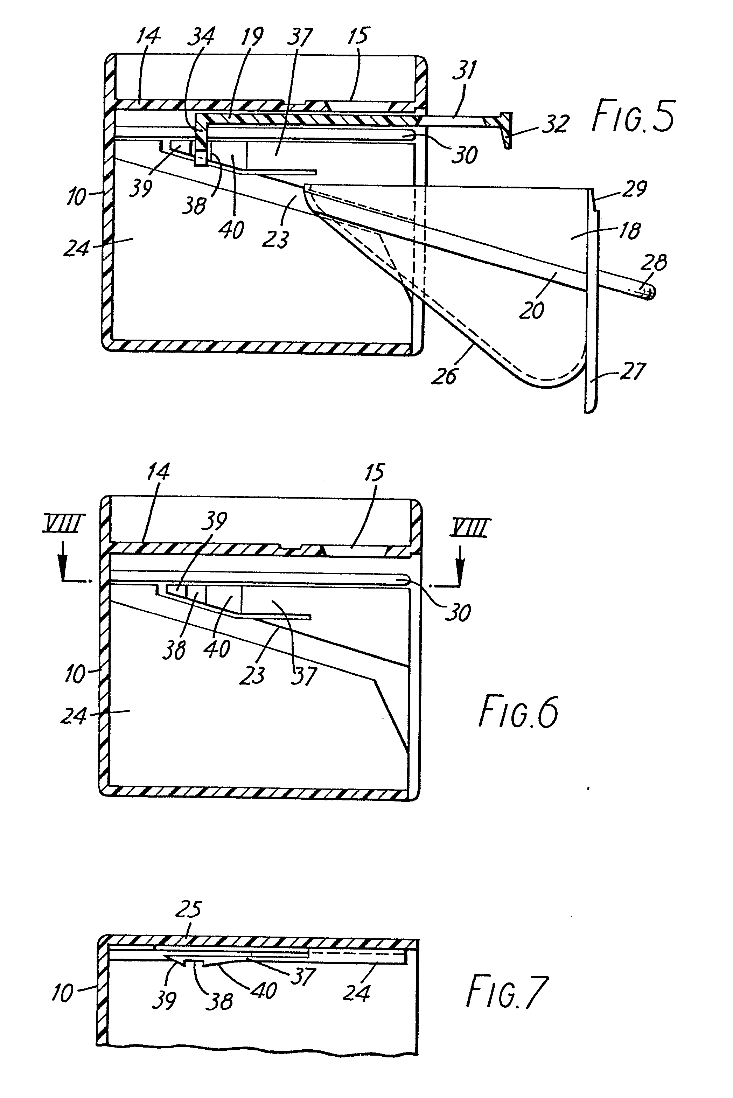

(57) A dispenser for dispensing metered amounts of particulate material such as washing powder, comprises a container having an upper part (11) adapted to hold a quantity of the material, a lower part (10) separated from the upper part (11) by a wall (14) having an aperture (15), a drawer (18) removably supported in the lower part (10) and a closure member (19) movable between a first position (Figure 4) in which an aperture (31) in the closure member is aligned with the aperture (15) in the separating wall (14), so that material can flow from the upper part (11) of the container into the drawer (18), and a second position (Figure 5) in which the aperture (15) in the separating wall (14) is closed. The closure member (19) is moved automatically from the first to the second position as the drawer (18) is pulled out of the container, by engagement of the drawer with a flange (32) on the front of the closure member (19), and is held in the second position by engagement of rear flanges (34) on the closure member (19) with spring clips (37) on the sides of the lower part (10) of the container, until the drawer (18) is reinserted into the container. The drawer (18) is guided to move downwards as it is pulled from the container, so that the drawer moves beneath the front flange (32) on the closure member (19) when the closure member has reached its second position.

FIG.4

Dispensers for particulate material

This invention relates to dispensers for particulate
material.

There is a need for an inexpensive dispenser which will
dispense measured amounts of powder or other particulate material.
For example, in using a domestic automatic washing machine it is
necessary to add a measured amount of washing powder.  This is
usually done by pouring the powder from a packet into a measuring
cup or dipping the cup into the packet, both of which methods
are inconvenient and easily result in spilling the powder.

It is an object of this invention to provide a
dispenser for dispensing measured amounts of particulate material
which is simple and convenient to operate and which can be manufactured
at relatively low cost.

This invention consists in a dispenser for particulate
material comprising a container having an upper part adapted to
hold a quantity of the material, a lower part separated from the
upper part by a wall having an aperture, a drawer supported
removably in the lower part, a closure member movable between
a first position in which the aperture is open so that material
can flow from the upper part of the container into the drawer
and a second position in which the aperture is closed, the drawer
being arranged to engage the closure member to move it to its
second position as the drawer is removed from the container and
to move the closure member to its first position as the drawer
is reinserted into the container, and means for holding the closure member in the second position whilst the drawer is removed from the container.

Suitably, the closure member is a plate movable horizontally beneath the said wall and having an aperture which is aligned with the aperture in the wall when the plate is in the first position.   The plate may be formed at its front edge with a depending member which is engaged by the drawer as the drawer is pulled from the container, so that the plate is pulled forwards to its second position.   Preferably, the drawer is movable on guide means which constrain the drawer to move forwards and downwards as it is pulled from the container, so that the drawer moves beneath the depending member on the slide when the slide has reached its second position.

In one form of the invention the means for holding the plate in its second position comprises at least one spring loaded catch member acting between the plate and the container and adapted to move into locking engagement when the plate moves to its second position, the drawer being arranged to engage the or each catch member to release the plate as the drawer is reinserted into the container.

The dispenser may be made from suitable plastics material.

The invention will now be described, by way of example, with reference to the accompanying drawings, in which:

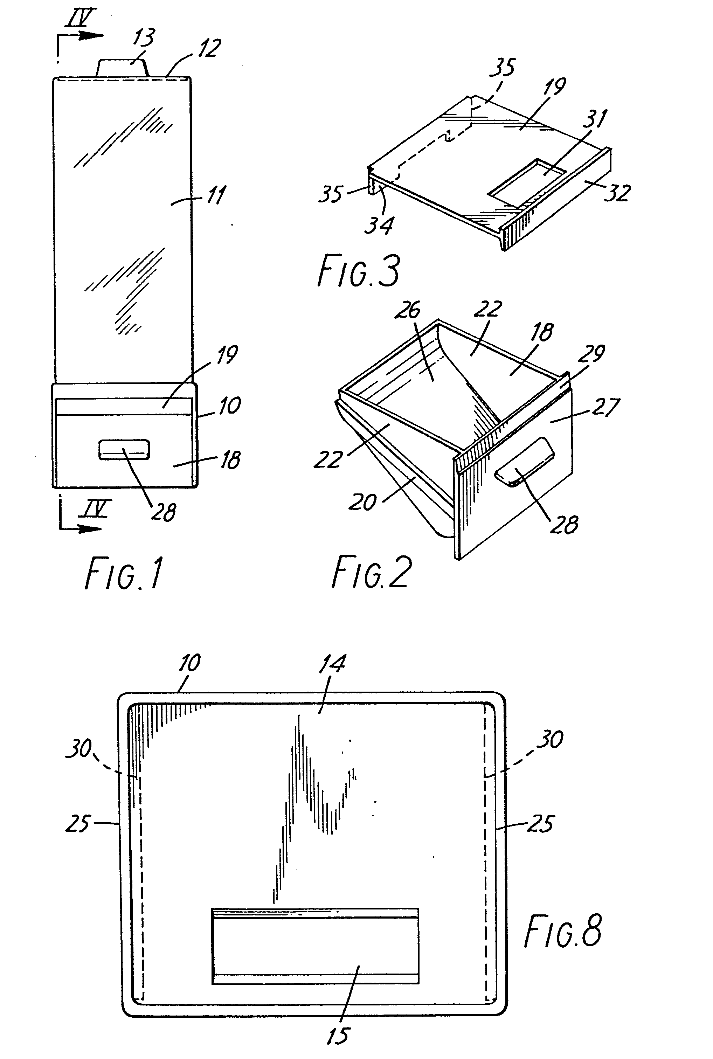

Figure 1 is a front elevation of a dispenser in accordance with the invention,

Figure 2 is a perspective view of a drawer forming part of the dispenser,

Figure 3 is a perspective view of a slide forming part of the dispenser,

Figure 4 is a section, to a larger scale, on line IV-IV of Figure 2,

Figure 5 is a view similar to that of Figure 4, showing the slide and drawer in an open position,

Figure 6 is a view similar to that of Figure 4, with the drawer and slide omitted,

Figure 7 is a fragmentary section on line VII-VII of Figure 6, and

Figure 8 is a plan view of the base portion of the dispenser.

Referring to the drawings, the dispenser consists of a body having a base part 10 and an upper part 11 fixed to the base part. The upper part 11 forms a container to hold washing powder or other particulate material, and is closed at its top by means of a lid 12 which can be lifted by means of a handle 13 to enable the container to be replenished. The bottom of the container is formed by an upper wall 14 of the base part 10. The upper wall 14 is formed with a rectangular aperture 15 positioned near to the front wall 16 of the dispenser. An inclined plate 17 in the upper part 11 directs powder towards the aperture 15.

The base part 10 of the dispenser is open at the front and contains a removable drawer 18, in which measured amounts of powder can be removed from the dispenser, and a slide 19 which closes the aperture 15 when the drawer 18 is removed from the dispenser, as described below.

The drawer 18 has a runner 20 formed on each side wall 22. The runners 20 slide in grooves 23 formed in side plates 24 fixed one to the inner face of each side wall 25 of the base part 10. The runners 20 and grooves 23 are inclined so that as the drawer is pulled out of the dispenser it moves forwards and downwards. The bottom wall 26 of the drawer is similarly inclined. The front wall 27 of the drawer, which carries a handle 28, is tapered at its upper edge to form a rearwardly inclined outer face 29 which engages the slide 19 as described below.

The slide 19 fits into the base part 10 between the upper wall 14 and the drawer 18, and rests on two runners 30 formed on the inner faces of the side walls 25 of the base part, so that the slide can move horizontally between an inner position (Figure 4) and an outer position (Figure 5). The slide is formed with a rectangular aperture 31 of the same dimensions as the aperture 15 in the wall 14 and positioned so that when the slide 19 is in its inner position, as shown in Figure 4, the apertures 15 and 31 are aligned. At its front edge the slide 19 is formed with a downwardly extending flange 32 which, when the slide is in its inner position, projects over the face 29 of the drawer 18. At its rear edge the slide has a downwa. lly projecting flange 34 which, when the slide is in its inner position, lies between the rear wall of the dispenser and the rear of the drawer 18. The side edges 35 of the flange 34 are spaced inwards from the side edges 36 of the main part of the slide 19, so that the flange 34 is clear of the runners 30 on which the slide is supported.

Each side plate 24 in the base part 10 is formed with a rearwardly extending resiliently flexible arm 37, which is parallel to and spaced from the side wall 25 of the dispenser so that the free end of the arm can flex towards the wall 25. The free end of the arm has an enlarged head formed with a vertical slot 38. On each side of the slot 38 the head has an inclined face 39, 40. In the outer position of the slide 19, as shown in Figure 5, the side edges of the rear flange 34 engage in the slots 38 of the two arms 37, to hold the slide in position.

In operation, when the drawer 18 is in the closed position as shown in Figure 4, powder flows through the aligned apertures 15 and 31 in the wall 14 and the slide 19 into the drawer until the drawer is full. When the drawer is pulled outwards, it engages, during the initial part of its movement, the front flange 32 of the slide 19, and so moves the slide outwards. As the slide 19 approaches its outer position, as shown in Figure 5, its rear flange 34 engages the inclined faces 39 on the two flexible arms 37 and so forces the arms apart until the flange enters the slots 38. Engagement of the flange 34 in the slots 38 prevents further outward movement of the slide 19. As the drawer 18 continues its outward movement, the face 29 on the drawer rides under the front flange 32 of the slide 19, so that the drawer can be removed from the dispenser. With the slide 19 in its outer position, the aperture 15 in the wall 14 is closed off by the slide to prevent powder from flowing into the base part 10. The engagement of the rear flange 34 of the slide 19 in the slots 38 of the flexible arms 37 prevents the slide from being inadvertently pushed back into its inner position whilst the drawer 18 is removed from the dispenser. As the empty drawer 18 is pushed back into the dispenser, it engages the inclined faces 40 on the flexible arms 37 and so forces them apart, releasing the rear flange 34 of the slide 19 from the slots 38. On further movement of the drawer it engages the flange 34 and pushes the slide 19 back to its inner position, in which more powder can flow into the drawer 18.

- 7 -

The dimensions of the drawer 18 are selected so that it holds a desired volume of material. The dispenser therefore provides a simple device for dispensing metered amounts of powder or other particulate material.

The various parts of the dispenser can be made from suitable plastics. The upper part of the container, or its front wall, can be made transparent so that the amount of material in the dispenser can be readily seen. The dispenser can be adapted for wall mounting, for example by providing holes in the rear wall of the dispenser to receive screws.

It will be appreciated that modifications could be made in the described embodiment. For example, the upper and lower parts of the container could be made in one piece. The means for holding the slide in its outer position could take forms other than the described arrangement.

CLAIMS:

1.        A dispenser for particulate material, comprising a
container having an upper part adapted to hold a quantity of
the material, a lower part separated from the upper part by a
wall having an aperture, a drawer supported removably in the
lower part, a closure member movable between a first position
in which the aperture is open so that material can flow from the
upper part of the container into the drawer and a second position
in which the aperture is closed, the drawer being arranged to
engage the closure member to move it to its second position
as the drawer is removed from the container and to move the
closure member to its first position as the drawer is reinserted
into the container, and means for holding the closure member
in the second position whilst the drawer is removed from the
container.

2.        A dispenser as claimed in claim 1, in which the
closure member is a plate movable horizontally beneath the said
wall and having an aperture which is aligned with the aperture
in the wall when the plate is in the first position.

3.        A dispenser as claimed in claim 2, in which the
plate is formed at its front edge with a depending member which
is engaged by the drawer as the drawer is pulled from the container,
so that the plate is pulled forwards to its second position.

4.       A dispenser as claimed in claim 3, in which the drawer is movable on guide means which constrain the drawer to move forwards and downwards as it is pulled from the container, so that the drawer moves beneath the depending member on the plate when the plate has reached its second position.

5.       A dispenser as claimed in claim 3 or claim 4, in which the plate has a further depending member at its rear edge positioned so as to be engaged by the drawer as the drawer is reinserted into the container thereby to move the plate to its first position.

6.       A dispenser as claimed in any one of claims 2 to 5, in which the means for holding the plate in its second position comprises at least one spring loaded catch member acting between the plate and the container and adapted to move into locking engagement when the plate moves to its second position, the drawer being arranged to engage the or each catch member to release the plate as the drawer is reinserted into the container.

7.       A dispenser as claimed in claim 6, in which the spring loaded catch member comprises a resilient arm fixed at one end to one side wall of the container and having at its other end a head with a locking element which engages a complementary locking element on the plate when the plate is in its second position, the head being formed with a cam face which is engaged by the drawer to move the head towards the said wall thereby to disengage the said complementary locking elements as the drawer is reinserted into the container.

8.        A dispenser as claimed in claim 7, in which the locking element on the said resilient arm is a recess and the complementary locking element on the plate is a projecting member which engages in the recess when the plate is in its second position.

9.        A dispenser as claimed in claim 8, in which the head of said resilient arm has a further cam face which is engaged by said projecting member to move the head towards the said wall as the plate moves from its first towards its second position, the head moving away from the wall to engage the projecting member in the said recess when the plate reaches its second position.

10.       A dispenser as claimed in claim 9, in which the said projecting member is part of a depending member on the plate positioned so as to be engaged by the drawer as the drawer is reinserted into the container thereby to move the plate to its first position following disengagement of the projecting member from the said recess.

FIG.1

FIG.3

FIG.2

FIG.8

FIG.4

0066422

FIG.5

FIG.6

FIG.7